# EUROPÄISCHE PATENTANMELDUNG

(11) **EP 1 471 630 A2**
(43) Veröffentlichungstag der Anmeldung: **27.10.2004**
(21) Anmeldenummer: 04009678.6
(22) Anmeldetag: 23.04.2004
(51) Int. Cl.: H02P 7/298, H02P 9/10, H02P 9/30

(54) **Drehstrommaschine und Vorrichtung sowie Verfahren zur Speisung eines elektrischen Netzes**

(30) Priorität: 26.04.2003 DE 10318923
(71) Anmelder: Hennchen, Norbert, 29664 Walsrode (DE)
(72) Erfinder: Hennchen, Norbert, 29664 Walsrode (DE)
(74) Vertreter: Scheffler, Jörg, Dipl.-Ing.

(57) **Zusammenfassung**

Um auch bei einem Netzspannungseinbruch in einem elektrischen Netz weiterhin Energie einer Energieerzeugungsanlage einspeisen zu können, ist erfindungsgemäß eine Drehstrommaschine (2) zur Speisung eines elektrischen Netzes (4), insbesondere eines Drehstromnetzes, mit einem mehrphasigen Ständer (16) zur netzseitigen Speisung und Regelung und einem mehrphasigen Läufer (6) zur maschinenseitigen Speisung und Regelung versehen, wobei die netzseitige Regelung von der maschinenseitigen Regelung entkoppelt ist.

## Beschreibung

Die Erfindung bezieht sich auf eine Drehstrommaschine zur Speisung eines elektrischen Netzes, insbesondere eines Drehstromnetzes. Des Weiteren betrifft die Erfindung eine Vorrichtung und ein Verfahren zur Speisung eines elektrischen Netzes.

Zur dezentralen Erzeugung von elektrischer Energie ist es bekannt, kleinere Anlagen wie zum Beispiel Windkraftanlagen, Wellengeneratoren oder Blockheizkraftwerke einzusetzen. Dabei verwenden diese Anlagen zur Speisung des elektrischen Netzes als Generatoren Drehstrommaschinen, beispielsweise Asynchron- oder Synchronmaschinen. Üblicherweise wird dabei bei weitgehend konstanter Drehzahl die mittels der Synchron- oder Asynchronmaschine erzeugte elektrische Energie mit konstanter Spannung und Frequenz direkt in das elektrische Netz, insbesondere in ein Drehstromnetz eingespeist. Bedingt durch den einfachen und robusten Aufbau bei gleichzeitig geringem Wartungsaufwand und hoher Zuverlässigkeit sowie Verfügbarkeit werden im allgemeinen Asynchronmaschinen eingesetzt.

Beispielsweise ist aus der DE 101 34 883 A1 ein Verfahren und eine Vorrichtung zur drehzahlstellbaren leistungselektronischen Regelung einer getriebelosen Windkraftanlage bekannt, bei welcher mehrere separate Windkraftanlagen über einen Gleichspannungszwischenkreis gekoppelt werden, der über eine Umrichtereinheit zur Netzeinspeisung mit dem elektrischen Netz verbunden ist. Dabei werden sowohl die netzseitige Regelung als auch die maschinenseitige Regelung über den gemeinsamen Gleichspannungszwischenkreis und der Umrichtereinheit vom elektrischen Netz versorgt.

Ein Nachteil von Drehstrommaschinen ist, dass bei Störungen im elektrischen Netz, z.B. bei Spannungseinbrüchen, die Anlagen möglichst schnell vom Netz zu trennen sind, da sowohl beim Spannungseinbruch selbst als auch bei Spannungswiederkehr hohe Stromund Drehmomentspitzen auftreten. Bedingt durch die hohen Strom- und Drehmomentspitzen kommt es sowohl bei Drehstrommaschinen mit so genanntem kurzgeschlossenem Läufer als auch bei so genannten doppelt gespeisten Drehstrommaschinen mit Läuferspeisung zu starken elektrischen und mechanischen Belastungen und demzufolge zu gefährlichen Betriebszuständen, welche im schlechtesten Fall zu einer Schädigung des elektrischen Antriebsstrang der Energieerzeugungsanlage oder bei Windkraftanlagen beispielsweise zu einer Schädigung der Rotorblätter führen. Somit ist ein weiterer Nachteil, dass die von Netzbetreibern geforderte Netzstützung durch Aufrechterhaltung der Einspeisung der kleineren Anlagen auch dann noch, wenn die Netzspannung durch einen Kurzschluss im elektrischen Netz oder Hochspannungsnetz für mehrere Sekunden einbricht, von den derzeitigen Drehstrommaschinen nicht geleistet werden kann.

Der Erfindung liegt daher die Aufgabe zugrunde, eine Drehstrommaschine zur Speisung eines elektrischen Netzes, insbesondere eines Drehstromnetzes anzugeben, welche auch bei einem Netzspannungseinbruch einen sichere und betriebsschonende Einspeisung ins Netz ermöglicht. Darüber hinaus ist eine besonderes geeignete Vorrichtung zur Speisung eines elektrischen Netzes und ein besonders einfaches Verfahren anzugeben.

Die Aufgabe bezüglich der Drehstrommaschine wird erfindungsgemäß durch die Merkmale des unabhängigen Anspruchs 1 gelöst. Vorteilhafte Ausgestaltungen der Erfindung sind Gegenstand der Unteransprüche.

Die Erfindung geht dabei von der Überlegung aus, dass durch Netzeinbrüche hervorgerufene Strom- und Drehmomentspitzen der Drehstrommaschine weitgehend vermieden werden sollten. Insbesondere sollte eine weitgehend schwankungsfreie und somit konstante Steuerung und Regelung der Drehstrommaschine ermöglicht sein. D.h. die Drehstrommaschine sollte derart ausgebildet sein, dass auch bei einem Spannungseinbruch im Netz bei gleichzeitig möglichst geringer mechanischer und elektrischer Belastung für eine zugrunde liegende Energieerzeugungsanlage weiterhin eine Einspeisung ins Netz ermöglicht ist. Hierzu ist bei einer Drehstrommaschine, insbesondere einer Asynchronoder Synchronmaschine zur Speisung eines elektrischen Netzes, insbesondere eines Drehstromnetzes, mit einem mehrphasigen Ständer zur netzseitigen Speisung und Regelung und einem mehrphasigen Läufer zur maschinenseitigen Speisung und Regelung erfindungsgemäß die maschinenseitige Regelung von der netzseitigen Regelung entkoppelt, wobei die maschinenseitige Regelung eine separate Stromversorgung aufweist. Mit anderen Worten: Die Drehstrommaschine, insbesondere eine doppelt gespeiste Drehstrommaschine, ist mit einer doppelten und voneinander getrennten Regelung - netzseitige und maschinenseitige Regelung - versehen, wobei bei Einbruch von Regelungsparametern auf einer der Seiten diese seitenbezogen kompensiert werden, indem die beiden Regelungen netzseitig oder maschinenseitig voneinander entkoppelt sind und die maschinenseitige Regelung unabhängig vom Netzstrom versorgt wird.

Zur Netzspeisung und -regelung ist der Ständer zweckmäßigerweise über einen Zwischenkreis mit einem zur Speisung des Netzes vorgesehenen Umrichter verbunden, wobei der Zwischenkreis derart regelbar ist, dass die Generatorleistung konstant gehalten ist und der Summe aus Netzeinspeiseleistung und Widerstandsleistung entspricht. Bevorzugt ist der Zwischenkreis als Gleichspannungs-Zwischenkreis ausgebildet. Dabei dient der Zwischenkreis insbesondere der netzseitigen Entkopplung der beiden Regelungen - netzseitiger Regelung und maschinenseitiger Regelung. Vorzugsweise ist der Zwischenkreis bei sinkender Netzspannung derart regelbar, dass im Generatorbetrieb die Generatorleistung konstant gehalten ist. Hierdurch ist sichergestellt, dass durch Netzeinbrüche hervorgerufene Strom- und Spannungsspitzen nicht auf die Drehstrommaschine und deren Regelung einwirken, sondern bereits netzseitig mittels des Zwischenkreises kompensiert werden. Dies ermöglicht einen gegenüber mechanische und elektrische Belastungen stabilen, insbesondere schonenden Betrieb der Drehstrommaschine im Generatorbetrieb. Demzufolge wird auch die Mechanik der Energieerzeugungsanlage, z.B. einer Windkraftanlage, beim Einbruch der Netzspannung nicht gestört. Bedingt durch einen derartig angeordneten und gesteuerten Zwischenkreis entstehen weder beim Netzspannungseinbruch noch bei der Netzspannungswiederkehr Stromoder Drehmomentspitzen, die das elektrische System, insbesondere den Antriebsstrang der Windkraftanlage oder deren Rotorblätter schädigen könnten.

Zweckmäßigerweise umfasst der Zwischenkreis zur Glättung eine Kondensatorschaltung. Die Kondensatoreinheit dient dabei insbesondere der Spannungsstützung. Dabei ist die Kondensatoreinheit sowohl zur Entkopplung als auch zur netzseitigen Spannungsstützung vorgesehen. Insbesondere wird mittels der Kondensatorschaltung eine der Netzregelung überlagerte Spannungsregelung ausgeführt, die zur Kompensation von Netzspannungsschwankungen eine entsprechende Gleichspannung am Zwischenkreis einstellt, anhand der eine symmetrische Dreiphasenspannung zur Netzspeisung erzeugt wird. Zweckmäßigerweise umfasst der Zwischenkreis hierzu zusätzlich einen elektronisch steuerbaren Widerstand, beispielsweise einen über ein Halbleiterelement, insbesondere einen Transistor steuerbaren Widerstand.

Der Umrichter ist vorteilhafterweise als Pulswechselumrichter ausgebildet. Dabei wird der vom Zwischenkreis eingestellte Gleichstrom über den Pulswechselumrichter mittels des sogenannten Pulsweitenverfahrens in Wechsel- oder Drehstrom umgewandelt und ins elektrische Netz, insbesondere Drehstromnetz eingespeist. Zur Gleichrichtung des am Ständer erzeugten Drehstroms umfasst die Drehstrommaschine netzseitig zwischen dem Zwischenkreis und dem Ständer einen Gleichrichter. Zur Spannungsstützung sowie zur Verminderung von Spannungs- und Stromverzerrungen der am Ständer erzeugten Dreiphasen- oder Mehrphasenspannung ist vorteilhafterweise eine Kondensatoreinheit vorgesehen, die dem Gleichrichter vorgeschaltet ist. Zweckmäßigerweise ist die Kondensatoreinheit am Ständer, insbesondere in Dreieckschaltung oder Sternschaltung angeschlossen. Die Kondensatoreinheit dient dabei insbesondere der Spannungsstützung. Dabei ist die Kondensatoreinheit sowohl zur Entkopplung als auch zur netzseitigen Spannungsstützung vorgesehen. Insbesondere wird mittels der Kondensatoreinheit eine weitere der Netzregelung überiagerte Spannungsregelung ausgeführt, die eine weitgehend konstante Gleichspannung am Zwischenkreis einstellt, anhand der mittels des Pulswechselumrichters eine symmetrische Dreiphasenspannung zur Netzspeisung erzeugt wird. Somit wird dem Zwischenkreis ein gleichgerichteter und gestützter Gleichstrom zugeführt.

Für eine maschinenseitigen Speisung und Regelung der Drehstrommaschine ist der Läufer über Schleifringe mit einer separaten Stromversorgung verbunden ist. Mit anderen Worten: Bei der Drehstrommaschine handelt es sich um eine doppelt gespeiste Drehstrommaschine, welche zusätzlich zur netzseitigen Speisung über Schleifringe auch maschinenseitig gespeist werden kann. Bevorzugt ist die Stromversorgung als unterbrechungsfreie Stromversorgung ausgebildet. Als Stromversorgung kann auch eine Batterie oder ein 230V-Stromnetz dienen. Alternativ kann der Strom aus dem Zwischenkreis des Umrichters entnommen werden.

Zur maschinenseitigen Regelung, insbesondere zur zusätzlichen Kompensation von netzseitigen Spannungsänderungen ist der Läufer über die Schleifringe vorteilhafterweise mit einem Gleichstromsteller verbunden. In einer bevorzugten Ausführungsform ist der Gleichstromsteller als eine aus elektronisch steuerbaren Halbleitern gebildete H-Brücke ausgeführt. Dabei wird in besonders einfacher Art und Weise über den mittels des Gleichstromstellers einstellbaren Gleichstrom bei bekannter Drehzahl der Drehstrommaschine im Generatorbetrieb die Spannung und der Strom am Ständer eingestellt, insbesondere geregelt.

Bezüglich der Vorrichtung zur Speisung eines elektrischen Netzes, insbesondere eines Drehstromnetzes wird die Aufgabe erfindungsgemäß durch die Merkmale des unabhängigen Anspruchs 11 gelöst, bei der eine Drehstrommaschine einen zur netzseitigen Speisung und Regelung vorgesehenen Ständer, und einen zur maschinenseitigen Speisung und Regelung vorgesehenen Läufer umfasst, wobei die maschinenseitige Regelung von der netzseitigen Regelung entkoppelt ist und eine separate Stromversorgung aufweist.

Bezüglich des Verfahrens zur Speisung eines elektrischen Netzes, insbesondere eines Drehstromnetzes, wird die Aufgabe erfindungsgemäß durch die Merkmale des unabhängigen Anspruchs 12 gelöst, wobei mittels einer Drehstrommaschine im Generatorbetrieb, die sowohl netzseitig als auch maschinenseitig getrennt voneinander gespeist und geregelt wird, die maschinenseitige Regelung zur Generatorleistung von der netzseitigen Regelung zur Netzeinspeiseleistung entkoppelt wird. Vorzugsweise wird dabei Generatorleistung konstant gehalten, wobei dieser der Summe aus Netzeinspeiseleistung und Widerstandsleistung entspricht. Insbesondere wird bei sinkender Netzspannung die Generatorleistung konstant gehalten.

Die mit der Erfindung erzielten Vorteile bestehen insbesondere darin, dass bedingt durch die Entkopplung der maschinenseitigen Regelung von der netzseitigen Regelung auch bei Einbruch der Netzspannung Strom und Generatorleistung der Drehstrommaschine konstant gehalten werden. Hierdurch wird somit auch nicht die Mechanik einer Energieerzeugungsanlage, z.B. einer Windkraftanlage gestört. Insbesondere entstehen weder beim Einbruch der Netzspannung noch bei deren Wiederkehr Strom- und Drehmomentspitzen bei der Drehstrommaschine, so dass eine Beschädigung des elektrischen Systems oder des Antriebsstrangs der Windkraftanlage oder deren Rotorblätter sicher vermieden ist. Dabei wird die überschüssige Generatorleistung in besonders einfacher Art und Weise für die Dauer des Spannungseinbruchs über den netzseitig angeordneten Zwischenkreis, insbesondere über den elektronisch einstellbaren Widerstand abgeführt. Demzufolge sind beim Betrieb der Windkraftanlage keine Eingriffe in die Betriebsführung der Windkraftanlage z.B. Bremsen der Rotorgeschwindigkeit oder Rotorblattverstellung erforderlich, um die Drehzahl der Anlage zu begrenzen und gefährliche Betriebszustände zu vermieden. Da darüber hinaus keine hohen Stromspitzen entstehen, ist die Vorrichtung und die Drehstrommaschine auch zur Einspeisung in schwache Stromnetze geeignet.

Ein Ausführungsbeispiel der Erfindung wird im Folgenden anhand einer Zeichnung näher erläutert. Darin zeigen:
- Figur 1: schematisch eine Vorrichtung zur Speisung eines elektrischen Netzes mit einer Drehstrommaschine,
- Figur 2: schematisch einen Versuchsaufbau zur Simulation eines Spannungseinbruchs im elektrischen Netz, und
- Figur 3: schematisch ein Diagramm mit Funktionsverläufen von Netzspannung, Netzeinspeiseleistung, Phasen- oder Ständerstrom und Generatorleistung.

Gleiche Teile sind in allen Figuren mit denselben Bezugszeichen versehen.

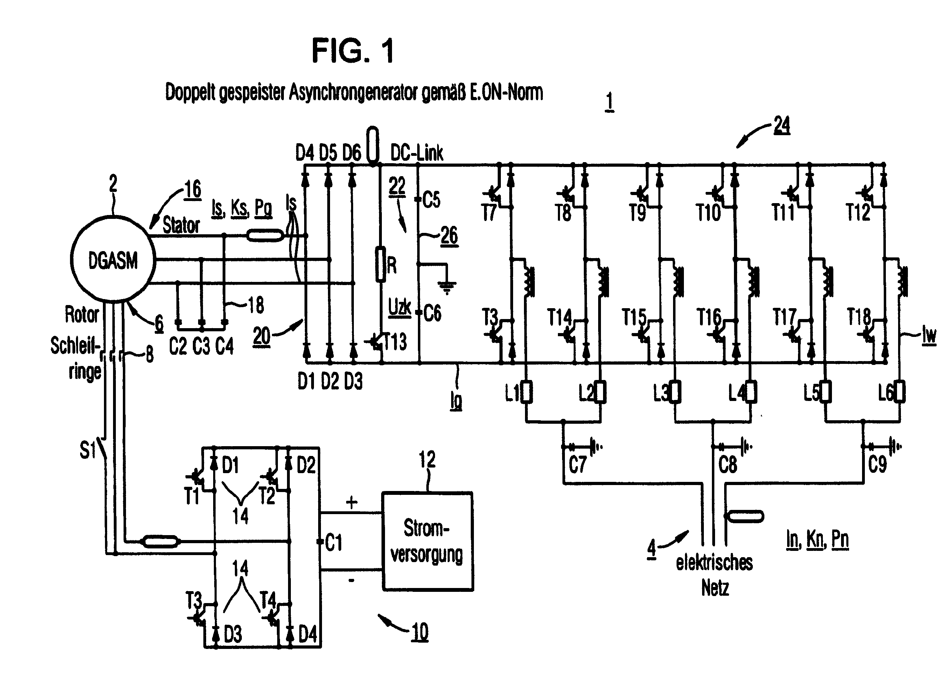

Figur 1 zeigt eine Vorrichtung 1 mit einer Drehstrommaschine 2, insbesondere im Generatorbetrieb zur Speisung eines elektrischen Netzes 4, insbesondere eines Drehstromnetzes. Die Drehstrommaschine 2, z.B. eine Asynchron- oder Synchronmaschine, ist doppelt gespeist. Dazu wird die Drehstrommaschine 2 am Läufer 6 (auch Rotor genannt) über Schleifringe 8 mit einem Gleichstrom oder Rotorstrom Ir eines Gleichstromstellers 10 gespeist. Der Läufer 6 umfasst eine rotierende mehrphasige, insbesondere 3-phasige Wicklung (auch Drehstromwicklung genannt), die an die Schleifringe 8 angeschlossen ist. Die Schleifringe 8 werden über den Gleichstromsteller 10 von einer Stromversorgung 12 mit dem Rotorstrom Ir bespeist. Bei der Stromversorgung 12 kann es sich um eine unterbrechungsfreie Stromversorgung, eine Batterie oder ein separates 230V-Stromnetz handeln, die über einen Kondensator C1 entkoppelt ist. Der Gleichstromsteller 10 ist als eine H-Brückenschaltung mit elektronisch steuerbaren Halbleiterelementen 14 ausgeführt, die über die Schleifringe 8 mit dem Läufer 6 verbunden sind. Die Halbleiterelemente 14 sind jeweils aus einer Parallelschaltung von einem Transistor T14 bis T17 mit einer Sperrdiode D1 bis D4 gebildet. Je nach Art und Ausbildung der Drehstrommaschine 2 - Einphasen- oder Mehrphasen-Wechselstrommaschine - ist bei einer Einphasenstrommaschine ein Schalter S1 in einem der Abgänge des Gleichstromstellers 10 angeordnet.

Netzseitig ist die Drehstrommaschine 2 am Ständer 16 (auch Stator genannt) mit einer Kondensatoreinheit 18 mit Kondensatoren C2 bis C3 versehen. Die Kondensatoreinheit 18 kann dabei am mehrphasigen, insbesondere 3-phasigen Ständer 16 in Dreieckschaltung oder Sternschaltung angeschlossen sein. Zur Gleichrichtung des am Ständer 16 oder der Ständerwicklung erzeugten Drehstroms oder Ständerstroms Is ist der Kondensatoreinheit 18 ein Gleichrichter 20 nachgeschaltet. Der Gleichrichter 20 umfasst zur Gleichrichtung des beispielsweise 3-phasigen Ständerstroms Is eine entsprechende Anzahl von Dioden D1 bis D6. D.h. der Gleichrichter 20 ist entsprechend der Phasenzahl des Ständerstroms Is der Drehstrommaschine 2 ausgebildet. Zur Einspeisung in das elektrische Netz 4 wird der durch den Gleichrichter 20 erzeugte Gleichstrom lg über einen Zwischenkreis 22 einem Umrichter 24 zugeführt. Der Umrichter 24 ist als Pulswechselumrichter ausgeführt, der durch ein sogenanntes Pulsweitenverfahren den Gleichstrom Ig in Wechselstrom Iw umwandelt und über Drosselelemente L1 bis L6 und Glättungskondensatoren C7 bis C9 als Netzstrom In in das Netz 4 einspeist. Dabei umfasst der Umrichter 24 beispielsweise mehrere aus einer Anzahl von Transistoren T5 bis T16 gebildete Halbleiterschalter. Der Zwischenkreis 22 umfasst zur Entkopplung der maschinenseitigen Regelung von der netzseitigen Regelung eine aus Kondensatoren C5 und C6 gebildete Kondensatorschaltung 26 und einen mittels eines Transistors T17 elektronisch steuerbaren Widerstand R.

Im Betrieb der Drehstrommaschine 2 wird der Läufer 6 über die Schleifringe 8 mit dem Gleichstrom oder Rotorstrom Ir des Gleichstromstellers 10 gespeist. Dabei wird anhand des Rotorstroms Ir bei bekannter Drehzahl bei der als Generator arbeitenden Drehstrommaschine 2 der Ständerstrom Is und die Ständerspannung Us entsprechend gesteuert und geregelt. Die an den Ständer 16 unmittelbar in Dreieck- oder Sternschaltung angeschlossene Kondensatoreinheit 18 dient hierbei der Stützung der Erregung der Drehstrommaschine 2 im Generatorbetrieb und der Verringerung der Verlustleistung im Läufer 6. Der am Ständer 16 erzeugte und mittels der Kondensatoreinheit 18 gestützte Ständerstrom Is wird über den Gleichrichter 20 gleichgerichtet und dem Zwischenkreis 22 zugeführt und mittels des Umrichters 24 in Wechselstrom lw umgewandelt und als Netzstrom In ins Netz 4 eingespeist.

Der Netzstrom In wird dabei zunächst in Abhängigkeit von der Zwischenkreisspannung Uzk des Zwischenkreises 22 geregelt. Übersteigt die Zwischenkreisspannung Uzk dabei einen vorgegebenen Grenzwert, so wird proportional zur Abweichung der Zwischenkreisspannung Uzk vom Grenzwert der Umrichter 24 mittels eines Ansteuersignal für die Transistoren T5 bis T16 derart gesteuert, dass der Gleichstrom lg des Zwischenkreises 22 über den Umrichter 24 als Netzstrom In ins Netz 4 eingespeist wird und somit die Drehstrommaschine 2 als Generator betrieben wird.

Wird die Drehstrommaschine 2 fortlaufend im Generatorbetrieb gefahren, so wird kontinuierlich Ständerstrom is über den Gleichrichter 20 in den Zwischenkreis 22 in die Kondensatoren C5 und C6 eingespeist, so dass sich zunächst die Ladespannung oder Zwischenkreisspannung Uzk der Kondensatoren C5 und C6 erhöht und damit auch der in das Netz 4 eingespeiste Netzstrom In. Der Ständerstrom Is ist dabei abhängig von der Bauart der Drehstrommaschine 2, insbesondere der Drehzahl der Drehstrommaschine 2 im Generatorbetrieb und vom Rotorstrom Ir. Somit wird der in das Netz 4 eingespeiste Netzstrom In auch über den Rotorstrom Ir geregelt.

Kommt es nun während des Generatorbetriebs der Drehstrommaschine 2 zu einem Einbruch der Netzspannung Un im Netz 4 durch eine Störung, wird weiterhin Netzstrom In ins Netz 4 eingespeist, so dass bedingt durch den Netzspannungseinbruch die ins Netz 4 abgegebene Netzeinspeiseleistung Pn sinkt, da der Umrichter 24 zum Schutz vor Überlastung strombegrenzt wird. Um nun die daraus resultierende Differenz zwischen Generatorleistung Pg der Drehstrommaschine 2 und Netzeinspeiseleistung Pn zu kompensieren, wird die netzseitige Regelung von der maschinenseitigen Regelung entkoppelt. Insbesondere wird dabei mittels des Zwischenkreises 22 anhand des elektronisch steuerbaren Widerstands R die Generatorleistung Pg konstant gehalten, die dabei der Summe aus Netzeinspeiseleistung Pn und Widerstandsleistung entspricht. Zudem wird hierdurch auch bei sinkender Netzspannung Un und sinkender Netzeinspeiseleistung Pn die Generatorleistung Pg konstant gehalten. Hierzu wird der Zwischenkreis 22 derart geregelt, dass eine aus der fallenden Netzeinspeiseleistung Pn und der konstanten Generatorleistung Pg resultierende Differenzleistung vom Widerstand R aufgenommen wird. Dabei wird die Differenzleistung möglichst für die gesamte Dauer des Netzspannungseinbruchs über den Widerstand R verbraucht. Somit bleibt trotz Netzspannungseinbruch der Ständerstrom Is und die Generatorleistung Pg konstant, so dass Strom- und Drehmomentspitzen beim Betrieb der Drehstrommaschine 2 sicher vermieden sind.

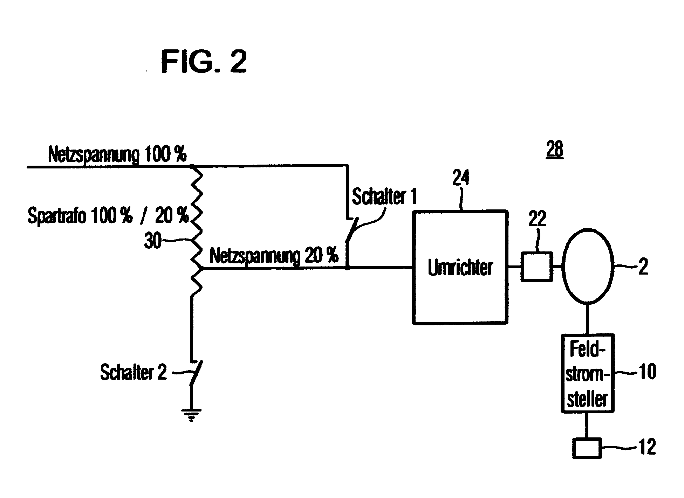

Figur 2 zeigt einen zur Prüfung der erfindungsgemäßen Drehstrommaschine 2 vorgesehenen Prüfstand 28. Der Einbruch der Netzspannung Un wird über einen Transformator 30 mit umschaltbarer Wicklung erzeugt. Mittels einer zwei Schalter S2 und S3 umfassenden Relaisschaltung 32, die zeitgesteuert ist, wird die Vorrichtung 1 mittels der Drehstrommaschine 2 bei geschlossenem Schalter S2 und geöffneten Schalter S3 an das Netz 4 angeschlossen. Durch Öffnen des Schalters S2 und Schließen des Schalters S3 für beispielsweise 500 ms wird der Einbruch der Netzspannung Un simuliert. In Figur 3 ist das Verhalten der Vorrichtung 1 bei Einbruch der Netzspannung Un für 500 ms anhand der Verläufe für die Netzspannung Un, die Netzeinspeiseleistung Pn und den Ständerstrom Is und der Generatorleistung Pg. Wie deutlich zu erkennen ist, hat der Netzspannungseinbruch keine Auswirkungen auf die maschinenseitigen Betriebsgrößen wie die Generatorleistung Pg und den Ständerstrom Is, so dass keine Gefährdung oder mechanische oder elektrische Beanspruchung der Drehstrommaschine 2 und deren zugrunde liegenden Energieerzeugungsanlage, z.B. einer Windkraftanlage gegeben ist.

## Patentansprüche

1. Drehstrommaschine (2) zur Speisung eines elektrischen Netzes (4), insbesondere eines Drehstromnetzes, mit einem mehrphasigen Ständer (16) zur netzseitigen Speisung und Regelung und einem mehrphasigen Läufer (6) zur maschinenseitigen Speisung und Regelung, wobei die maschinenseitige Regelung von der netzseitigen Regelung entkoppelt ist und eine zugehörige separate Stromversorgung aufweist.

2. Drehstrommaschine nach Anspruch 1, bei der der Ständer (16) über einen Zwischenkreis (22) mit einem zur Speisung des Netzes (4) vorgesehenen Umrichter (24) verbunden ist, wobei der Zwischenkreis (22) derart regelbar ist, dass die Generatorleistung (Pg) konstant gehalten ist und der Summe aus Netzeinspeiseleistung (Pn) und Widerstandsleistung entspricht.

3. Drehstrommaschine nach Anspruch 2, bei der der Zwischenkreis (22) bei sinkender Netzspannung (Un) derart regelbar ist, dass die Generatorleistung (Pg) konstant gehalten ist.

4. Drehstrommaschine nach Anspruch 2 oder 3, bei der der Zwischenkreis (22) einen elektronisch steuerbaren Widerstand (R) und eine Kondensatorschaltung (26) umfasst.

5. Drehstrommaschine nach einem der Ansprüche 2 bis 4, bei der der Umrichter (24) als Pulswechselumrichter ausgebildet ist.

6. Drehstrommaschine nach einem der vorhergehenden Ansprüche, bei der eine Kondensatoreinheit (18) vorgesehen ist, die am Ständer (16), insbesondere in Dreieckschaltung oder Sternschaltung angeschlossen ist.

7. Drehstrommaschine nach einem der vorhergehenden Ansprüche, bei der der Läufer (6) zur maschinenseitigen Speisung über Schleifringe (8) mit einer separaten Stromversorgung (12) verbunden ist.

8. Drehstrommaschine nach Anspruch 7, bei der die Stromversorgung (12) als unterbrechungsfreie Stromversorgung ausgebildet ist.

9. Drehstrommaschine nach einem der vorhergehenden Ansprüche 2 bis 8, bei der der Gleichstromsteller (10) zur Energieversorgung mit dem Zwischenkreis (22) des Umrichters (24) verbunden ist.

10. Drehstrommaschine nach einem der vorhergehenden Ansprüche, bei der der Läufer (6) zur maschinenseitigen Regelung über Schleifringe (8) mit einem Gleichstromsteller (10) verbunden ist.

11. Drehstrommaschine nach Anspruch 10, bei der der Gleichstromsteller (10) als eine aus elektronisch steuerbaren Halbleiterelementen (14) gebildete H-Brücke ausgeführt ist.

12. Vorrichtung (1) zur Speisung eines elektrischen Netzes (4), insbesondere eines Drehstromnetzes, mit einer Drehstrommaschine (2) nach einem der Ansprüche 1 bis 11, umfassend einen zur netzseitigen Speisung und Regelung vorgesehenen Ständer (16), und einen zur maschinenseitigen Speisung und Regelung vorgesehenen Läufer (6), wobei die maschinenseitige Regelung von der netzseitigen Regelung entkoppelt ist und eine separate Stromversorgung aufweist.

13. Verfahren zur Speisung eines elektrischen Netzes (4), insbesondere eines Drehstromnetzes, mittels einer Drehstrommaschine (2) im Generatorbetrieb, die sowohl netzseitig als auch maschinenseitig getrennt voneinander gespeist und geregelt wird, wobei die maschinenseitige Regelung zur Generatorleistung (Pg) von der netzseitigen Regelung zur Netzeinspeiseleistung (Pn) entkoppelt wird.

14. Verfahren nach Anspruch 13, bei dem die Generatorleistung (Pg) konstant gehalten wird und der Summe aus Netzeinspeiseleistung (Pn) und Widerstandsleistung entspricht.

15. Verfahren nach Anspruch 13 oder 14, bei dem bei sinkender Netzspannung (Un) die Generatorleistung (Pg) konstant gehalten wird.
